# EUROPÄISCHE PATENTSCHRIFT

(11) **EP 0 743 278 B1**
(45) Veröffentlichungstag und Bekanntmachung des Hinweises auf die Patenterteilung: **12.08.1998**
(21) Anmeldenummer: 96107558.7
(22) Anmeldetag: 11.05.1996
(51) Int. Cl.: C01B 7/075, F25J 1/00

(54) **Flüssigchlor als Kältemittel in der Chlorverflüssigung**
Liquid chlorine as cooling agent in chlorine liquefaction
Chlore liquide comme réfrigérant dans la liquéfaction du chlore

(30) Priorität: 17.05.1995 DE 19518085
(43) Veröffentlichungstag der Anmeldung: 20.11.1996
(73) Patentinhaber: ELEKTRO-CHEMIE IBBENBÜREN GMBH, D-49479 Ibbenbüren (DE)
(72) Erfinder: Hülsing, Bernard, 48499 Salzbergen (DE)
(74) Vertreter: Köckeritz, Günter

(56) Entgegenhaltungen:
- DE-A- 43 253
- DE-B- 1 273 548
- FR-A- 2 289 439

## Beschreibung

Die Erfindung bezieht sich auf ein Verfahren zur Chlorverflüssigung. In einer Chlor-Fabrik (Alkali-Chlorid-Elektrolyse,Chlorverflüssigung) werden in verschiedenen Prozeßstufen Kühlmittel mit unterschiedlichen Temperaturen zur Wärmeabfuhr benötigt. Diese Temperaturniveaus lassen sich oft mit den üblichen Kühlwassertemperaturen nicht beherrschen.

Solche Prozeßstufen sind z.B.
- die Wärmeabfuhr aus den mit Schwefelsäure betriebenen Chlortrockentürmen
- die Kühlung des entstehenden Wasserstoffs vor und während der Verdichtung zur Kondensation von Feuchtigkeit
- die Trockenluftherstellung und Erzeugung von Druckluft
- die Verflüssigung von Chlor in nachgeschalteten Kondensatoren
- die Kühlung von Flüssigchlor vor der Verladung in Kesselwagen

Es ist bekannt, daß in vielen Bereichen der Industrie Kühlprozesse zu einem notwendigen und wesentlichen Verfahrensbestandteil gehören. Zur Kühlung von Medien oder Anlagen kommen unterschiedliche Kühlsysteme und Kältesätze zum Einsatz. Unter Kältemittel sollen solche Flüssigkeiten verstanden werden, welche als Arbeitsstoffe in Kältemaschinen zum Einsatz kommen (DIN 8962), während der Begriff Kühlmittel als Sammelbezeichnung für Wärmeübertragungsmittel gebraucht wird. Als bevorzugtes Kältemittel wurden bisher Fluor-Chlor-Kohlenwasserstoffe (FCKW, R12,R22...) eingesetzt. Diese ungiftigen, nicht brennbaren und chemisch stabilen Verbindungen galten lange Zeit als ideale Kältemittel für den Einsatz in Kühlsystemen.

Neuere wissenschaftliche Erkenntnisse zur Zerstörung der lebenswichtigen Ozonschicht in der Erdatmosphäre bestätigen allerdings einen engen Zusammenhang zwischen den FCKW-Emissionen verschiedendster Quellen und der Herausbildung des "Ozonlochs" in der Stratosphäre. Aus diesen Gründen ist die Verwendung und das Inverkehrbringen von teil- und vollhalogenierten Kohlenwasserstoffen (H-FCKW, FCKW,CKW) ab 1995 in Deutschland und ab 1998 in Europa verboten.

Als alternative Kältemittel in Kälteanlagen wurden schon verschiedenste Stoffe und Stoffgemische vorgeschlagen z.B. Propan, Butan oder Ammoniak. Propan und Butan sind durch ihre Brennbarkeit und der damit verbundenen Explosionsgefahr problematisch in ihrer Handhabung und damit für die meisten Anwendungszwecke nicht geeignet. Ammoniak als Kältemittel hat unangenehme toxische Eigenschaften. Alle diese Kältemittel bergen in Verbindung mit Chlor außerdem die Gefahr heftiger Reaktionen.

Aus der Druckschrift DE 43253 ist ein Verfahren zur Chlorverflüssigung bekannt, bei dem ein Teilstrom 14 des Flüssigchlors abgezweigt und einem Kühler 2 bzw. Chlorverdampfer zugeführt wird.
In der DE-AS 1273548 wird ein Chlorverdampfer zur Kühlung von flüssigem Chlor auf tiefere Temperaturen offenbart.
Aufgabe dieser bekannten Erfindung ist die wirksame Vermeidung der Explosionsgefahr, welche durch das Auftreten von Verunreinigungen im Chlorgas, insbesondere Wasserstoff, verursacht wird.
Dieses bekannte Problem der Bildung von explosiven Gasgemischen bei der Chlorverflüssigung wird nach der DE-AS 1273548 durch eine stufenweise Kondensation bei abnehmenden Temperaturen gelöst.

Das dieser Erfindung zugrunde liegende Problem besteht in der Notwendigkeit, verschiedene Kühlmitteltemperaturen durch einen chlorfreien Kühlmittelkreislauf für beliebige Anwendungen innerhalb und außerhalb der Chlorverflüssigung bereitzustellen.
Dieses Problem wird mit den erfindungsgemäßen Merkmalen des Patentanspruches 1 gelöst.
Es ist vorgesehen, einen Teilstrom des in der Chlorverflüssigung erzeugten Flüssigchlors abzuzweigen und einem Chlorverdampfer mit einem chlorfreien Kühlmittelkreislauf zuzuführen.

Die erzielten Vorteile des erfindungsgemäßen Verfahrens bestehen insbesondere darin, daß in einfacher Weise und mit geringem technischem Aufwand ein Teil von der in der Prozeßstufe Chlorverflüssigung anfallenden Hauptchlormenge abgezweigt werden kann. Diese abgezweigte Menge Flüssigchlor wird dann einem Chlorverdampfer zugeführt, in dem ein Kühlmittelkreislauf temperiert wird.

Die zur Chlorverdampfung notwendige Verdampfungswärme, wird dem zirkulierenden Kühlmittel nach bekanntem Verfahren entzogen. Das auf diese Weise temperierte Kühlmittel läßt sich nun beliebig für weitere Anwendungen einsetzen. Bei diesem erfindungsgemäß vorgeschlagenen Verfahren zur Chlorverflüssigung ist kein zusätzliches Kühlsystem und kein zusätzliches Kältemittel erforderlich. Die Verwendung von Chlor als Kältemittel in einer Chlorverflüssigungsanlage ermöglicht insbesondere eine optimale Energieausnutzung der ohnehin vorhandenen Chlorverdichter, die Vermeidung von problematischen Kältemitteln in Kältesätzen und die Einsparung von Kosten für die Anschaffung, den Betrieb und die Instandhaltung dieser Kältesätze.

In der Mehrzahl der bekannten Verflüssigungsanlagen wird die nicht zu verändernde Verdichterleistung (z.B. bei Turboverdichtern) einer installierten Anlage, durch Rückführung eines Teilstroms des verdichteten Chlorgases auf die Saugseite des Verdichtersystems an die jeweilig notwendige Produktionsmenge von Flüssigchlor angepaßt.

Diese Betriebsweise ist energetisch gesehen nicht optimal. Dagegen kann bei der erfindungsgemäßen Betriebsweise die gesamte, durch den Verdichter komprimierte Chlormenge kondensiert werden. Ein Teilstrom des Flüssigchlors wird dem Chlorverdampfer als Kältemittel zugeleitet und die durch Verdampfung entstehende Chlorgasmenge erst danach auf die Saugseite des Verdichters zurückgeführt. Hierdurch wird der der Verdichtersaugseite ursprünglich zugeführte Chlorgasstrom verringert.

Besonders vorteilhafte Ausgestaltungen der Erfindung sind in den Patentansprüchen 2 und 5 angegeben. Es besteht die Möglichkeit, durch Einstellung des Drucks im Chlorverdampfer die Siedetemperatur des Flüssigchlors zu verändern und dadurch eine Variation des Temperaturniveaus des Kühlmittels in weiten Bereichen zu ermöglichen.

Die beigefügte Tabelle 1 zeigt den Zusammenhang zwischen Druck und Siedetemperatur bei Flüssigchlor. Aus Tabelle 1 ist zu entnehmen, daß die Verdampfungstemperatur von Flüssigchlor in weiten Bereichen (- 60 °C bis + 20 °C) über die Einstellung des Drucks geregelt werden kann. Das im Sekundärkreislauf des Chlorverdampfers geführte Kühlmittel, kann nach diesem Verfahren je nach Anwendungszweck ausgewählt und eine entsprechende Temperatur eingestellt werden.

Eine technisch und energetisch günstige Lösung zur Flüssigchlorherstellung und Kälteerzeugung, ergibt sich auch aus der im Anspruch 3 beschriebenen Verfahrensweise. Danach ist es möglich bei einem hohen Verflüssigungsdruck (> 7 bar) die Kondensationswärme des Chlors bei der Chlorverflüssigung durch normales Kühlwasser abzuführen. Dieses kostengünstige Verfahren ermöglicht in Verbindung mit der Nutzung von Flüssichlor als Kältemittel nach Anspruch 1, den Verzicht auf zusätzliche Kältemittel und Kältesysteme im Chlorverflüssigungsprozeß.

Mit einer Einstellung des Verdampferdrucks von 3,66 bis 4,3 bar läßt sich also eine Verdampfertemperatur von 0 bis 5 °C realisieren, was eine Temperatureinstellung des Kühlmittels(Kaltwasser) von 10 °C ermöglicht. Aus Tabelle 1 ist auch ersichtlich, daß bei Drucken > 7 bar die Siedetemperatur des Flüssigchlors über 20 °C ansteigt und damit eine Kühlung durch normales Kühlwasser möglich ist.

Die nicht unproblematischen toxologischen Eigenschaften von Chlor sind allgemein bekannt und beschränken die Einsatzmöglichkeiten der Erfindung im wesentlichen auf die Chlorherstellung und angrenzende Prozesse. In einer Chlorverflüssigungsanlage müssen aber ohnehin eine Reihe von Sicherheitsmaßnahmen getroffen werden wie zentrale Chlorabsorptionsanlagen, Sicherheitsbehälter zur Aufnahme von Flüssigchlor und Chlorsensoren für die Überwachung der Betriebsluft und der Kühlwassersysteme. Ein zusätzlicher Chlorverdampfer zur Kälteerzeugung verursacht deshalb im Gesamtsystem der Chlorverflüssigung keine neuen Probleme. Nach längerer Betriebsdauer des erfindungsgemäßen Chlorverdampfers besteht die Möglichkeit, daß sich die im Flüssigchlor enthaltenen geringen Mengen Stickstofftrichlorid (NCL3) im Verdampfer ansammeln. Da sich Stickstofftrichlorid bei niedrigen Temperaturen nicht ausreichend schnell zersetzt, kann es zu höheren Konzentrationen und zum plötzlichen Zerfall im Chlorverdampfer kommen. Zur Vermeidung einer Anreicherung von NCL3 wird das in Anspruch 5 beschriebene Verfahren, daß dem Chlorverdampfer stets eine größere Menge Flüssigchlor zugeführt wird, als zur Temperatureinstellung des Kühlmittels erforderlich ist, angewendet.

Die Erfindung wird nachfolgend in einem Ausführungsbeispiel anhand einer Figur erläutert.

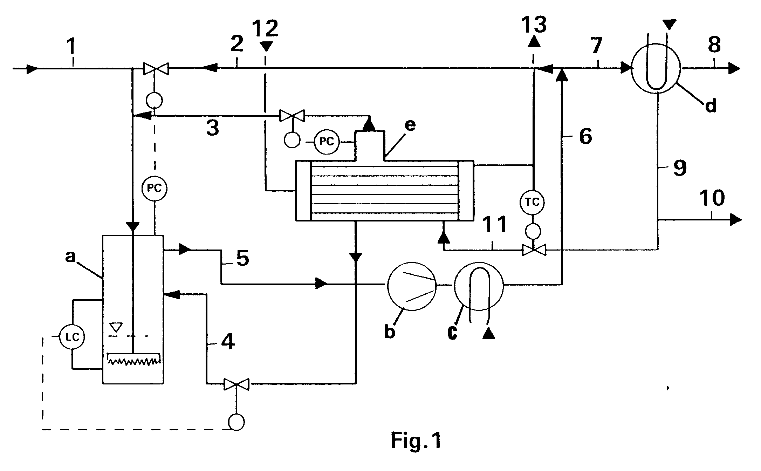

In der Figur ist das erfindungsgemäße Verfahren zur Chlorverflüssigung schematisch dargestellt.
Das in der Chlorelektrolyse erzeugte Chlorgas wird über den Strom 1 dem CL2-Vorkühler a zur Kühlung zugeführt. Aus den Rückführströmen 2 und 3 gelangt ebenfalls Chlorgas in den CL2-Vorkühler a. Über den Strom 4 erhält der CL2-Vorkühler a Flüssigchlor aus dem Verdampfer e als Kühlmedium. Nach Kühlung des im CL2-Vorkühler a enthaltenen Chlorgases aus den Strömen 1 bis 4 erfolgt dessen gemeinsame Zuführung über den Strom 5 zur Saugseite des Verdichters b. Der Verdichter b leistet die zur Verflüssigung notwendige Verdichtung des Chlorgases (etwa 10 bar), welches anschließend im Chlorgaskühler c gekühlt wird. Über die Ströme 6 und 7 gelangt das verdichtete Chlorgas zum Chlorkondensator d. Im Chlorkondensator d wird das gasförmige Chlor weitgehend zu flüssigem Chlor kondensiert und über die Ströme 9 und 10 dem Flüssigchlorlager zugeleitet. Die nicht kondensierten Chloranteile und die darin enthaltenen Erdgase werden über den Strom 8 der Chlorabsorbtionsanlage (nicht eingezeichnet) zugeführt. Erfindungsgemäß gelangt nun eine Teilmenge des Flüssigchlors über die Ströme 9 und 11 in den Chlorverdampfer e.

Der Kühlmittelkreislauf des Chlorverdampfers e, ist durch dieStröme 12 und 13 gekennzeichnet. Die dem Chlorverdampfer e zugeführte Flüssigchlormenge 11 richtet sich nach dessen notwendiger Kälteleistung und somit nach dem Bedarf der über den Kühlmittelkreislauf angeschlossenen Kühlsysteme. Nach Wärmeaufnahme und Verdampfung des Flüssigchlors im Chlorverdampfer e wird das Chlorgas über den Strom 3 in den CL2-Vorkühler a geleitet und erneut in den Kreislauf eingespeist (Strom 5).

Von der erhöhten Flüssigchlorzuführung (Strom 11) zur Vermeidung einer NCL3-Anreicherung im Chlorverdampfer e wird die im Cl2-Vorkühler a benötigte Flüssigchlormenge dem Verdampfer e entnommen. Diese über Strom 4 entnommene Menge dient insbesondere zur Aufrechterhaltung der Kühlbedingungen im CL2-Vorkühler a.

In Tabelle 2 sind drei Beispiele für Leistungen eines erfindungsgemäßen Chlorverdampfers in einer Chlorverflüssigungsanlage aufgeführt. Hierbei sind die Stromnummern 1.1 bis 1.3 usw. den jeweiligen Leistungsbeispielen des Verdampfers zugeordnet. Der Aggregatzustand des Chlors in den einzelnen Strömen ist durch (g) gasförmig und (l) flüssig gekennzeichnet.

Das Besipiel 3 mit einer Verdampferleistung von 600 000 kcal/h und den Strömen 1.3 bis 11.3 zeigt, daß fast die gesamte Verdichterleistung zur Flüssigchlorerzeugung und Kühlmittelbereitstellung über den Chlorverdampfer verwendet wird. Die energetisch ungünstige Rückführung von Chlorgas über den Strom 2 zur CL2-Vorkühlung a liegt hier bei 0, was die besonderen Vorteile der Erfindung verdeutlicht.

Aber auch bei den anderen Beispielen ist die energetisch ungünstigere Rückführung von Chlorgas über den Strom 2 zur Saugseite des Verdichters geringer als ohne Chlorverdampfer 4. Der sonst ungenutzte Teil der Verdichterleistung wird also durch den erfindungsgemäßen Chlorverdampfer zur Erzeugung von Kühlleistung genutzt.

**Tab.1**

| **Druck und Siedetemperatur für Flüssigchlor** | |
|---|---|
| Druck | Temperatur |
| ≈ 6,7 bar | 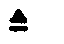 ≈ 20 °C |
| ≈ 5,8 bar | 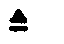 ≈ 15 °C |
| ≈ 5,0 bar | 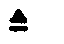 ≈ 10 °C |
| ≈ 4,3 bar | 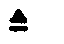 ≈ 5 °C |
| ≈ 3,66 bar | 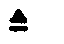 ≈ 0 °C |
| ≈ 3,1 bar | 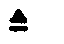 ≈ -5 °C |
| ≈ 2,6 bar | 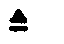 ≈ -10 °C |
| ≈ 2,18 bar | 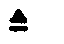 ≈ -15 °C |
| ≈ 1,8 bar | 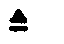 ≈ -20 °C |
| ≈ 1,5 bar | 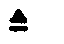 ≈ -25 °C |
| ≈ 1,2 bar | 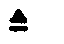 ≈ -30 °C |
| ≈ 0,97 bar | 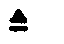 ≈ -35 °C |
| ≈ 0,77 bar | 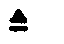 ≈ -40 °C |
| ≈ 0,61 bar | 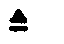 ≈ -45 °C |
| ≈ 0,48 bar | 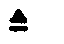 ≈ -50 °C |
| ≈ 0,36 bar | 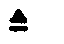 ≈ -55 °C |
| ≈ 0,27 bar | 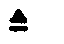 ≈ -60 °C |

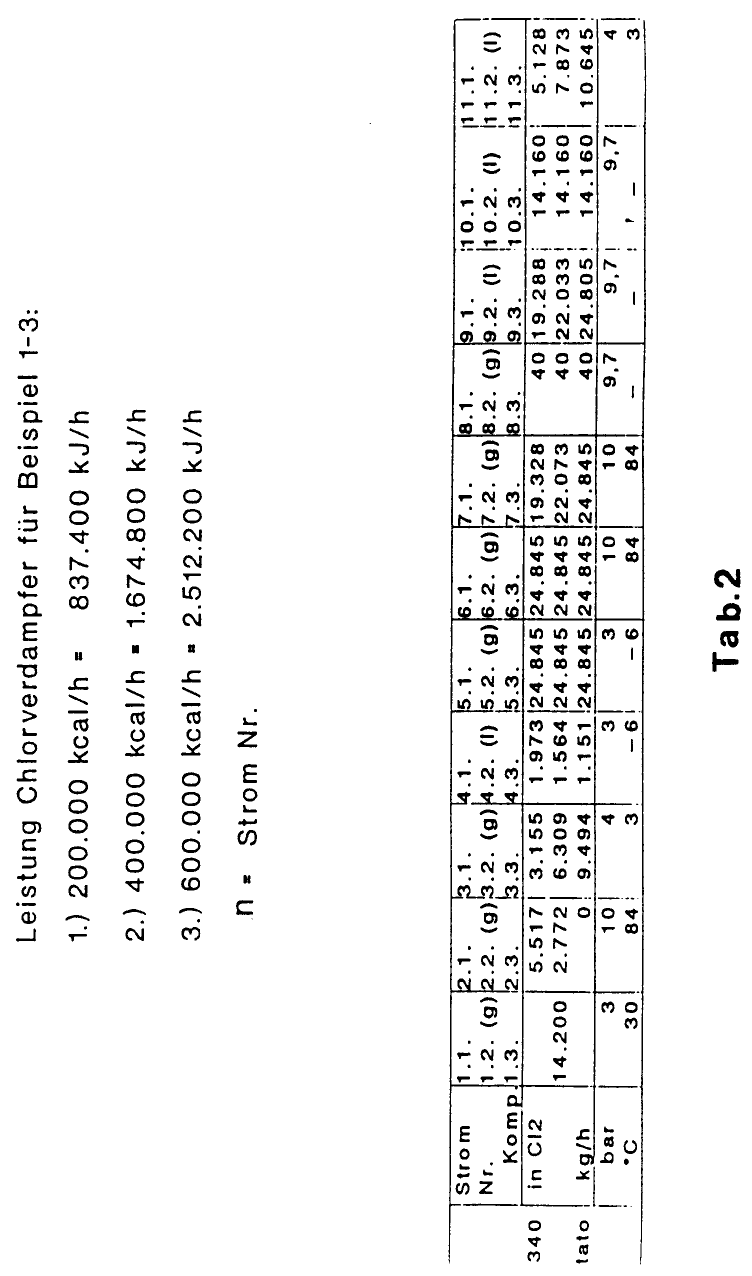

## Patentansprüche

1. Verfahren zur Chlorverflüssigung, bei dem ein Teilstrom 4 des Flüssigchlors abgezweigt und einem Kühler (a) zuführbar ist, dadurch gekennzeichnet, daß ein weiterer Teilstrom (11) des Flüssigchlors einem Chlorverdampfer (e) mit einem chlorfreien Kühlmittelkreislauf zugeführt wird.

2. Verfahren nach Anspruch 1, dadurch gekennzeichnet, daß durch Variation des Verdampfungsdrucks im Chlorverdampfer, die Temperatur des Kühlmittels eingestellt wird.

3. Verfahren nach Anspruch 1 und 2, dadurch gekennzeichnet, daß die Kondensation des Chlorgases bei einem Druck von mindestens 7 bar erfolgt und Kühlwasser als Kühlmittel verwendet werden kann.

4. Verfahren nach einem der Ansprüche 1 bis 3, dadurch gekennzeichnet, daß durch Einstellung eines Verdampfungsdrucks von 3,66 bis 4,3 bar, ein Kühlwasser mit einer Temperatur von 10 °C erzeugt wird.

5. Verfahren nach einem der Ansprüche 1 bis 4, dadurch gekennzeichnet, daß dem Chlorverdampfer zur Vermeidung einer Anreicherung von Stickstofftrichlorid (NCL3), stets eine größere Menge Flüssigchlor zugeführt wird, als zur Temperatureinstellung des Kühlmittels notwendig ist.

6. Vorrichtung zur Chlorverflüssigung, dadurch gekennzeichnet, daß ein Chlorverdampfer angeordnet ist, der einen Teilstrom Flüssigchlor und ein Kühlmittelkreislauf aufweist.

7. Vorrichtung nach Anspruch 6, dadurch gekennzeichnet, daß der Druck im Chlorverdampfer 1,5 bis 6,7 bar beträgt.

8. Vorrichtung nach Anspruch 6, dadurch gekennzeichnet, daß der Druck im Kondensator > 7 bar ist.

## Claims

1. Chlorine liquefying method, wherein a partial flow (4) of the liquid chlorine is branched-off and is suppliable to a cooler (a), characterised in that an additional partial flow (11) of the liquid chlorine is supplied to a chlorine evaporator (e) with a chlorine-free coolant cycle.

2. Method according to claim 1, characterised in that the temperature of the coolant is set by varying the evaporation pressure in the chlorine evaporator.

3. Method according to claims 1 and 2, characterised in that the condensation of the chlorine gas is effected at a pressure of at least 7 bar, and cooling water may be used as the coolant.

4. Method according to one of claims 1 to 3, characterised in that a cooling water with a temperature of 10° C is produced by setting an evaporation pressure of between 3.66 and 4.3 bar.

5. Method according to one of claims 1 to 4, characterised in that, in order to prevent an enrichment of nitrogen trichloride (NCl₃), a greater quantity of liquid chlorine is always supplied to the chlorine evaporator than is required to set the temperature of the coolant.

6. Chlorine liquefying apparatus, characterised in that a chlorine evaporator is provided, which has a partial flow of liquid chlorine and a coolant cycle.

7. Apparatus according to claim 6, characterised in that the pressure in the chlorine evaporator is between 1.5 and 6.7 bar.

8. Apparatus according to claim 6, characterised in that the pressure in the condenser is > 7 bar.

## Revendications

1. Procédé de liquéfaction du chlore, selon lequel un courant partiel (4) du chlore liquide peut être dérivé et acheminé à un refroidisseur (a), caractérisé en ce qu'un autre courant partiel (11) du chlore liquide est acheminé à un évaporateur de chlore (e) comportant un circuit de réfrigérant exempt de chlore.

2. Procédé suivant la revendication 1, caractérisé en ce que la température du réfrigérant est mise au point par variation de la pression d'évaporation dans l'évaporateur de chlore.

3. Procédé suivant les revendications 1 et 2, caractérisé en ce que la condensation du gaz de chlore se fait à une pression d'au moins 7 bars, et en ce que de l'eau de refroidissement peut être utilisée en tant que réfrigérant.

4. Procédé suivant l'une des revendications 1 à 3, caractérisé en ce que par une mise au point d'une pression d'évaporation de 3,66 bar à 4,3 bar, on produit une eau de refroidissement à une température de 10°C.

5. Procédé suivant l'une des revendications 1 à 4, caractérisé en ce que pour éviter un enrichissement de trichlorure d'azote (NCl₃), on achemine à l'évaporateur de chlore du chlore liquide en une quantité toujours plus abondante qu'il ne le faut pour la mise au point de la température du réfrigérant.

6. Dispositif pour la liquéfaction du chlore, caractérisé en ce qu'on prévoit un évaporateur de chlore qui comprend un courant partiel de chlore liquide et un circuit de réfrigérant.

7. Dispositif suivant la revendication 6, caractérisé en ce que la pression régnant dans l'évaporateur de chlore est de 1,5 à 6,7 bars.

8. Dispositif suivant la revendication 6, caractérisé en ce que la pression régnant dans le condenseur est > 7 bars.
